# EUROPEAN PATENT APPLICATION

(11) **EP 4 756 881 A1**
(43) Date of publication of application: **10.06.2026**
(21) Application number: 24874935.0
(22) Date of filing: 02.10.2024
(51) Int. Cl.: H01M 4/04, G01B 7/004, B65H 43/04

(54) **SECONDARY BATTERY MANUFACTURING SYSTEM AND SECONDARY BATTERY MANUFACTURING METHOD**

(30) Priority: 05.10.2023 KR 20230132344
(71) Applicant: LG Energy Solution, Ltd., Seoul 07335 (KR)
(72) Inventor: HAN, Ki Deok, Daejeon 34122 (KR); SU, Jun Hyo, Daejeon 34122 (KR); LEE, Jae Hwan, Daejeon 34122 (KR); IM, Young Nam, Daejeon 34122 (KR); CHOI, Jae Ho, Daejeon 34122 (KR); HONG, Jin Pyo, Daejeon 34122 (KR)
(74) Representative: BCKIP Part mbB
(86) International application number: PCT/KR2024/014935
(87) International publication number: WO 2025/075379

(57) **Abstract**

Example embodiments provide a secondary battery manufacturing method. The secondary battery manufacturing method includes: loading datum point formation data indicating formation of datum points on an electrode sheet, in which the datum point formation data includes a sequence number, a coordinate, and an evaluation of each of the datum points; setting recognition sections of the datum points based on the datum point formation data, in which the recognition sections are ranges of the coordinates on the electrode sheet in which the datum points are to be sensed; and sensing the datum points on the electrode sheet to collect datum point sensing data.

## Description

### [Technical Field]

The present invention relates to a secondary battery manufacturing system and a secondary battery manufacturing method. The present application claims the benefit of priority based on Korean Patent Application No. 10-2023-0132344, filed on October 5, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by press rolls. In the roll press process, a density, performance and surface quality of the electrode may be determined. In the slitting process, the electrode may be cut into a plurality of electrodes according to the design of the battery cell.

### [Disclosure]

### [Technical Problem]

The present invention is directed to providing a method of manufacturing a secondary battery with improved traceability.

### [Technical Solution]

Example embodiments of the present invention provide a secondary battery manufacturing method. The secondary battery manufacturing method includes: loading datum point formation data indicating formation of datum points on an electrode sheet, in which the datum point formation data includes a sequence number, a coordinate, and an evaluation of each of the datum points; setting recognition sections of the datum points based on the datum point formation data, in which the recognition sections are ranges of the coordinates on the electrode sheet in which the datum points are to be sensed; and sensing the datum points on the electrode sheet to collect datum point sensing data.

A length of each of the recognition sections may be equal to an interval between the datum points.

A center of each of the recognition sections may be the same as a coordinate of a corresponding datum point among the datum points.

The datum point sensing data may include a recognized sequence number and a recognized coordinate of each of the datum points.

The secondary battery manufacturing method may further include correcting the recognition sections, based on the datum point formation data and the datum point sensing data.

The recognition sections may be corrected based on a difference between the coordinate and the recognized coordinate of each of the datum points.

The secondary battery manufacturing method may further include generating an alarm when the datum points are not recognized in the recognition sections of the datum points.

The alarm may be generated when the evaluation of the datum points of the datum point formation data reveals good.

The datum point formation data may be collected by a coating process in which one or more coated lanes are formed on the electrode sheet, and the datum point sensing data may be collected by a roll pressing process in which the electrode sheet is pressed.

Example embodiments provide a secondary battery manufacturing system. The secondary battery manufacturing system includes: a datum point sensor configured to sense datum points on an electrode sheet to collect datum point sensing data, in which the datum point sensing data includes a recognized sequence number and a recognized coordinate of each of the datum points; and a controller configured to load datum point formation data indicating formation of the datum points on the electrode sheet, in which the datum point formation data includes a sequence number, a coordinate, and an evaluation of each of the datum points, and the controller is further configured to set recognition sections of the datum points, based on the datum point formation data.

The controller may be further configured to correct the recognition sections, based on the datum point formation data and the datum point sensing data.

The recognition sections may be corrected based on a difference between the coordinate and the recognized coordinate of each of the datum points.

The controller may be further configured to generate an alarm signal for generating an alarm when the datum points are not recognized in the recognition sections of the datum points.

The alarm signal may be generated when the evaluation of the datum points of the datum point formation data reveals good.

### [Advantageous Effects]

A secondary battery manufacturing system according to example embodiments of the present invention is capable of providing an operator with an alarm about the occurrence of an event that interferes with recognition of datum points on a roll map when the event occurs. Accordingly, it is possible to increase a recognition rate of the datum point and the reliability of the roll map.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 illustrates a coating device according to example embodiments.
FIG. 3 illustrates a roll pressing device according to example embodiments.
FIG. 4 is a flowchart of a secondary battery manufacturing method according to embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

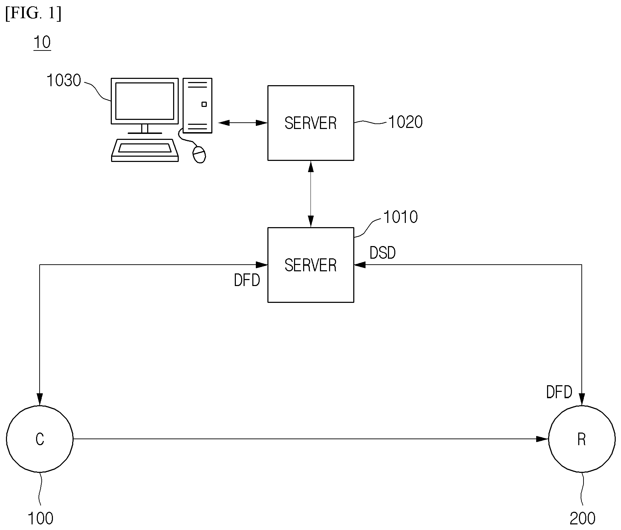

FIG. 1 illustrates a secondary battery manufacturing system 10 according to example embodiments.

Referring to FIG. 1, the secondary battery manufacturing system 10 may include a coating device 100, a roll pressing device 200, a server 1010, a server 1020, and a client device 1030.

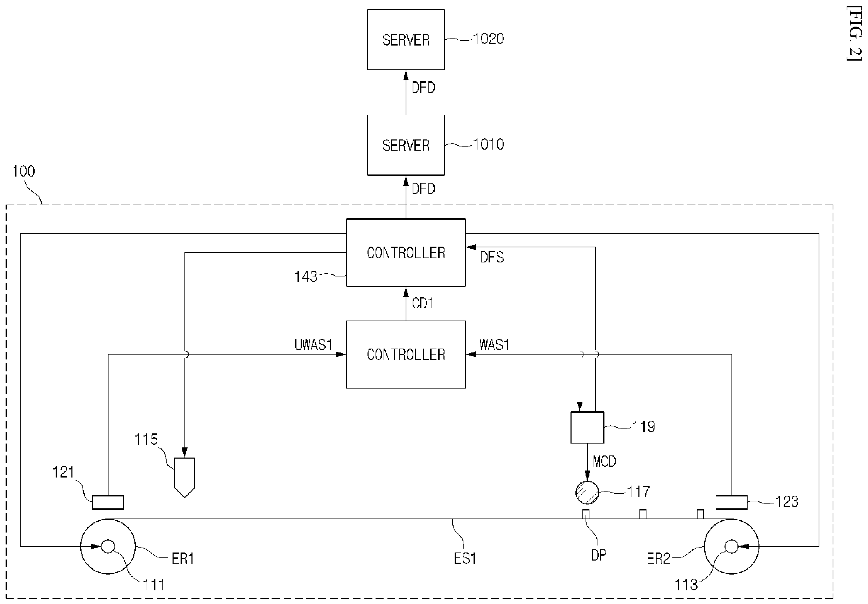

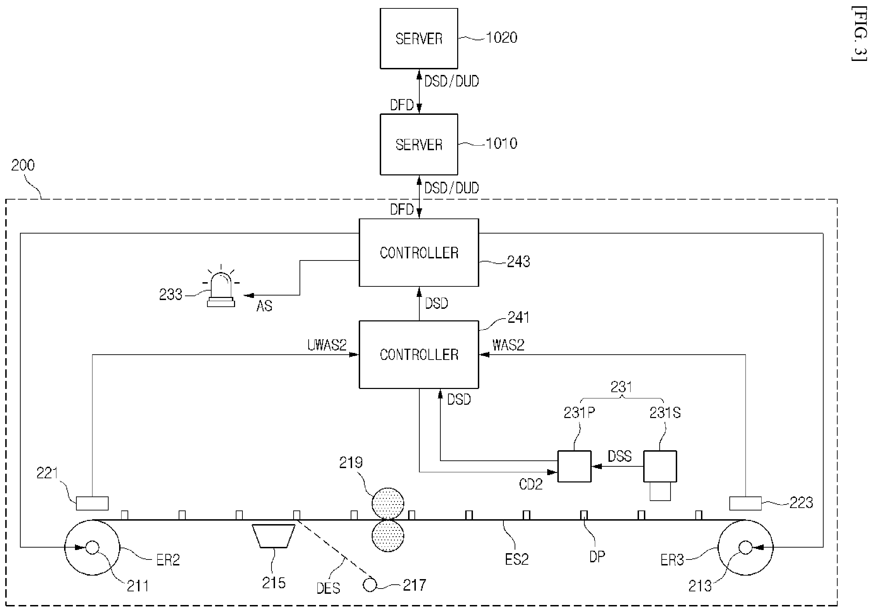

The secondary battery manufacturing system 10 may be configured to manufacture a battery cell (e.g., a cylindrical battery cell) by performing a series of roll-to-roll processes. An electrode sheet unwound from an input electrode roll may be processed by one of a die coater 123 (see FIG. 2) of the coating device 100 and pressing rolls 219 (see FIG. 3) of the roll pressing device 200, and the processed electrode sheet may be wound into an electrode roll. Accordingly, each of operations performed by the coating device 100 and the roll pressing device 200 to produce electrodes of a secondary battery may be referred to as a roll-to-roll process.

The coating device 100 may perform the coating process on the electrode sheet. In the coating process, the electrode sheet may be coated with an electrode slurry. The electrode slurry may include an active material, a conductive agent, a binder, and a solvent. The electrode slurry may be prepared by dissolving the active material, the conductive agent, the binder, etc. in the solvent.

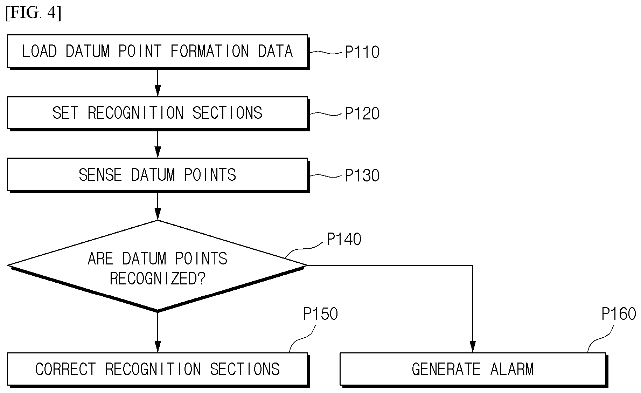

The roll pressing device 200 may perform the roll pressing process on the electrode sheet. In the roll pressing process, the electrode sheet coated with the electrode slurry may be passed through between the pressing rolls 219 (see FIG. 4). Through the roll pressing process, a surface of the electrode sheet may be planarized, and a binding force between an active material and a current collector on the electrode sheet be improved.

The secondary battery manufacturing system 10 may further include a slitting device. The slitting device may perform the slitting process on the electrode sheet. The electrode sheet may be divided into a plurality of electrode sheets by the slitting process. The slitting process may be an optional process. The slitting process of the slitting device may be omitted according to specifications of an electrode assembly of a battery cell that is finally manufactured. Electrode rolls completed by the slitting device may be processed by a winding device or a notching device. Accordingly, a stack type electrode assembly or a cylindrical electrode assembly may be provided.

When the electrode sheet includes a defect, the defect of the electrode sheet may be scrapped. A defective part of the electrode sheet may be scrapped by the roll pressing device 200 or a rewinding stage (not shown).

The server 1010 may be a device for communication between controllers of manufacturing equipment and the server 1020. A controller 143 (see FIG. 2) of the coating device 100 and a controller 243 (see FIG. 4) of the roll pressing device 200 may communicate with the server 1020 through the server 1010. Accordingly, data of process events occurring in the coating device 100 and the roll pressing device 200 may be transmitted to the server 1020.

The server 1010 may be configured to convert electrode specification data transmitted from the server 1020 into a language of the second controller 143. The server 1010 may be also configured to convert datum point formation data DFD (see FIG. 2), datum point sensing data DSD (see FIG. 3), and datum point nonrecognition data DUD (see FIG. 3) into a language of the server 1020, and write the datum point formation data DFD, the datum point sensing data DSD, and the datum point nonrecognition data DUD to a database of the server 1020.

The server 1020 may be configured to generate roll maps of the coating device 100 and the roll pressing device 200 that include data of process events. The data of the process events of the roll maps may include values indicating the process events and coordinates matching the values. The coordinates may represent positions on the electrode sheet. Accordingly, the roll maps enable feedback, feedforward, and tracking of a secondary battery manufacturing process as described below.

Roll maps may be produced in units of lots. A lot is a production unit of a roll-to-roll process, and an electrode roll separated after a target winding length is achieved in each process is an example of a lot. Similarly, an electrode roll loaded on an unwinder in each process is an example of a lot. The server 1220 may generate and store a roll map of each of processes (e.g., the coating process and the roll pressing process).

In a roll map, time series data constructed over time (i.e., according to the progress of a process) may be related to coordinate data collected based on the amount of movement (i.e., the amount of exhaustion or the amount of input) of the electrode sheet.

The manufacture of a secondary battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process based on data generated according to a result of the leading process will be referred to as feedforward.

Here, the workpiece is an article provided as a result of each process, e.g., an electrode sheet on which the coating process, the roll press process, and the slitting process are performed. The intermediate product may include separators that are cut by the notching process, electrodes, or an assembly thereof (i.e., an electrode assembly). The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

Generally, process events occur as a result of performing a process and thus data thereof is time series data. Accordingly, data of the process events may include values indicating the events and time values matched thereto.

For feedforward, time series data should be related to positions on workpieces, components, intermediate products, and products of the real world. Here, the feedforward may include controlling processing of an electrode sheet, based on a roll map generated in a preceding process. The roll map may allow the time series data to be related with coordinate data including coordinates of the positions on workpieces, the components, the intermediate products, and the products of the real-world. The roll map may provide matching between the time series data and the workpieces, the components, the intermediate products, and the products of the real world, based on the coordinate data. Accordingly, generation of the roll map and feedforward based on the roll map may improve the productivity and quality of the secondary battery manufacturing process by digitizing and objectifying aspects of a process that depend on an operator's discretion.

A roll map of a preceding lot may be used to improve a process of a following lot, and this operation may be referred to as process feedback. The process feedback using the roll maps may include identifying process conditions and process parameters that cause a problem and a defect, based on data included in the roll maps.

Furthermore, as described below, the roll maps may be cumulatively generated for workpieces, intermediate products, and products of unit processes to track process history of products (e.g., battery cells, battery modules, or battery packs) on the market. For example, the battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, history data of the manufacture of the battery cell may be retrieved based on the cell ID.

According to example embodiments, the server 1020 may be a data processing system that supports all activities required to manage the manufacture of a secondary battery, such as work schedule management, work instructions, quality control, and work performance aggregation. The server 1020 may be, for example, a manufacturing execution system (MES). The server 1020 may be configured to perform inputting, processing, outputting, and communication of data necessary for the manufacture of electrodes, including the coating process, a press process, and a manufacturing process.

According to other example embodiments, the server 1020 may be configured to store and process raw measurement data. The server 1020 may manage the quality of processing the electrode sheet by continuously monitoring the processing of the electrode sheet based on the measurement data. According to example embodiments, the server 1020 may be a statical process controller (SPC). The server 1020 may collect and analyze manufacturing data in almost real time to identify problematic conditions in a timely manner and provide a notification to an operator before potential problems occur.

According to other example embodiments, the server 1020 may be, for example, a data warehouse, and store a roll map for a long period of time according to a product quality guarantee period and the like.

According to other example embodiments, the server 1020 may perform all functions of an MES, an SPC, and a data warehouse or be provided separately from the MES, the SPC, and the data warehouse to create a role map.

FIG. 2 illustrates a coating device 100 according to example embodiments.

Referring to FIG. 2, the coating device 100 may include an unwinder 111, a rewinder 113, a die coater 115, a marker 117, a controller 119, a first rotary encoder 121, a second rotary encoder 123, an inspector 131, a controller 141, and a controller 143.

A first electrode roll ER1 may be loaded on the unwinder 111. The unwinder 111 may be configured to unwind a first electrode sheet ES1 from the first electrode roll ER1. The rewinder 113 may be configured to wind the first electrode sheet ES1 into a second electrode roll ER2. Accordingly, the first electrode sheet ES1 may be moved between the unwinder 111 and the rewinder 113.

The first electrode sheet ES1 may be wound into the second electrode roll ER2 and be cut and separated in a transverse direction after a certain winding length is reached. The separated second electrode roll ER2 is an article on which the coating process is completed and may be managed as a lot that is a unit of a production process.

The first rotary encoder 121 may be configured to sense an amount of the first electrode sheet ES1 unwound from the first electrode roll ER1 by the unwinder 111. Accordingly, the first rotary encoder 121 may be configured to generate an input amount signal UWAS1 indicating a length of the first electrode sheet ES1 unwound by the unwinder 111. The first rotary encoder 121 may be configured to transmit the input amount signal UWAS1 to the controller 141.

The second rotary encoder 123 may be configured to sense an amount of the first electrode sheet ES1 wound into the second electrode roll ER2 by the rewinder 113. Accordingly, the second rotary encoder 123 may be configured to generate an exhaustion amount signal WAS1 indicating a length of the first electrode sheet ES1 wound by the rewinder 113. The second rotary encoder 123 may be configured to transmit the exhaustion amount signal WAS1 to the controller 141.

The die coater 115 may be configured to coat the first electrode sheet ES1 with an electrode slurry containing an active material. An electrode slurry containing a positive electrode active material may be provided on the first electrode sheet ES1 when the first electrode sheet ES1 is a positive electrode current collector, and an electrode slurry containing a negative electrode active material may be provided on the first electrode sheet ES1 when the first electrode sheet ES1 is a negative electrode current collector.

The first electrode sheet ES1 processed by the die coater 115 may include one or more coated lanes and one or more uncoated parts. A coated lane is a part of the first electrode sheet ES1 to which the electrode slurry is applied. An uncoated part is a part of the first electrode sheet ES1 to which the electrode slurry is not applied (i.e., in which an electrode plate is exposed).

One or more coated lanes and one or more uncoated parts of an electrode sheet ES may extend in a machine direction of the first electrode sheet ES1. The one or more coated lanes and the one or more uncoated parts may be divided in the transverse direction of the first electrode sheet ES1.

The controller 141 may be configured to collect coordinate data CD1 of the first electrode sheet ES1, based on the exhaustion amount signal WAS1 and/or the input amount signal UWAS1 of the first electrode sheet ES1. For example, the controller 141 may determine a moving distance of the first electrode sheet ES1, based on the exhaustion amount signal WAS1 of the first electrode sheet ES1. Accordingly, the controller 141 may be configured to determine a position of a part of the first electrode sheet ES1, which is to be wounded by the rewinder 113, on the first electrode sheet ES1 at each point in time when an event occurs on the first electrode sheet ES1.

As another example, the controller 141 may determine a moving distance of the first electrode sheet ES1, based on the input amount signal UWAS1 of the first electrode sheet ES1 or based on each of the exhaust amount signal WAS1 and the input amount signal UWAS1. Hereinafter, as a non-limiting example, the technical idea of the present invention will be described with respect to an embodiment in which the controller 141 collects the coordinate data CD1 based on the exhaustion amount signal WAS1 of the first electrode sheet ES1.

The coordinate data CD1 may include coordinates matching parts of the first electrode sheet ES1. That is, each of arbitrary points on the first electrode sheet ES1 may match a coordinate corresponding thereto. The coordinate may be one-dimensional (1D) quantity in the machine direction (or a longitudinal direction) of the first electrode sheet ES1 but are not limited thereto. The coordinate may be two-dimensional (2D) quantity in the machine direction and the transverse direction of the electrode sheet ES.

According to example embodiments, the controller 119 may be configured to control the marker 117 based on the coordinate data CD1. According to example embodiments, the controller 119 may be configured to calibrate coordinates of the coordinate data CD1 based on an offset length of the marker 117, generate a command MCD to control the marker 117 based on the calibrated coordinates, and transmit the command MCD to the marker 117.

Here, the offset length of the marker 117 may be a length of the first electrode sheet ES1 between a part of the first electrode sheet ES1 sensed by the second rotary encoder 123 and a part of the first electrode sheet ES1 processed by the marker 117. The controller 119 may be configured to transmit data of an operation of the marker 117 (i.e., data indicating datum points DP formed successfully) to the controller 143.

The marker 117 may be, for example, a printing device. The marker 117 may be configured to form datum points DP on the first electrode sheet ES1, based on a body including a product ID and specifications of a manufacturing recipe transmitted from the server 1010. The datum points DP may be formed on one or more uncoated parts of the first electrode sheet ES1.

The datum points DP may be formed on the electrode sheet ES at predetermined intervals . As a non-limiting example, a target winding length of the second electrode roll ER2 may be 1800 m and the datum points DP may be formed at intervals of 100 m. Other elements on the first electrode sheet ES1 may be located based on the datum points DP. The datum points DP may be used to calibrate coordinate data of elements on a roll map. For example, the datum points DP may be used to calibrate coordinates of a scrapped part of the second electrode sheet ES2 (i.e., a start coordinate and end coordinate of the scrapped part of the second electrode sheet ES2) by the roll press device 200 of FIG. 4 and to calibrate a coordinate of a joint of the second electrode sheet ES2. As another example, the datum points DP may be used to calibrate coordinates formed by combining two or more second electrode rolls ER2.

The datum points DP may be repeatedly formed. As a non-limiting example, each of the same datum points DP may be repeated, for example, five times. According to example embodiments, the datum points DP may be repeatedly formed to prevent or migrate removal of all datum points DP of a specific sequence number during partial scrapping of the electrode sheet ES disposal or in the notching process. The number of times of repeatedly forming the datum points DP may be 1 to 4 times or 6 times or more.

According to example embodiments, each of the datum points DP may include a plurality of signs. Here, the term "symbol" may be understood as a general term including signs, characters, marks, etc. that represent a particular idea. For example, the datum points DP may include symbols indicating the orientation of the datum points DP and an input direction of an electrode roll (e.g., an input direction of the second electrode roll ER2 of FIG. 3 and an input direction of a third electrode roll ER3 of FIG. 4), and symbols indicating sequence numbers of the datum points DP.

The datum points DP are formed at equal intervals and thus a position (i.e., a coordinate) of each of the datum points DP may be approximately identified based on the sequence number of each of the datum points DP. For example, when an interval between the datum points DP is 120 m, the symbols representing the sequence numbers of the respective datum points DP indicate that coordinates of the datum points DP are n*120m. Here, n denotes the sequence number of each of the datum points DP. The exact coordinates of the datum points DP may be identified based on the exhaustion amount signal WAS1.

The symbol (hereinafter referred to as a first symbol) indicating the orientation of the datum points DP may include a sign, character, and mark that identify the orientation. The symbols (hereinafter referred to as second symbols) indicating the sequence numbers of the datum points DP may be included in a set different from that of the first symbol. For example, when the second symbols include Arabic numerals, the first symbol may include arbitrary characters providing information about the orientation, e.g., alphabet including Greek, Latin, Mongolian, Armenian, N'Ko alphabet, Georgian alphabet, Braille, Cyrillic alphabet, Tifinagh alphabet, and Thaana alphabet, featural alphabet such as Hangul, Abjad such as Syriac, Arabic, and Hebrew, Abugida such as Gujarati, Nevanagari, Lao, Malayalam, Burmese, Sinhalese, Geez, Oriya, Canadian Aboriginal scripts, Kannada, Khmer, Tamil, Thai, Telugu, and Tibetan, and syllabary such as Cherokee syllabary and Ghana. The first symbol may be included in the same set as the second symbol. For example, the first symbol may include a string of two or more consecutive Arabic numerals, such as 00, 11, 22, and 33.

An outer part of the first electrode roll ER1 put into the coating device 100 may be wound into an inner part of the second electrode roll ER2. Similarly, an inner part of the first electrode roll ER1 put into the coating device 100 may be wound into an outer part of the second electrode roll ER2. The outer part of the second electrode roll ER2 put into the roll pressing device 200 of FIG. 3 may be wound into an inner part of the third electrode roll ER3 (see FIG. 3). Similarly, the inner part of the second electrode roll ER2 put into the roll pressing device 200 of FIG. 3 may be wound into an outer part of the third electrode roll ER3 (see FIG. 3). In addition, left and right sides of the second electrode sheet ES2 (see FIG. 2) and the third electrode sheet ES3 (see FIG. 3) may be inverted according to a method of loading and unwinding the second electrode roll ER2 and the third electrode roll ER3. Here, the machine direction MD may be an axial direction in which the left and right sides are inverted.

The first symbol may include various types of symbols, such as different English alphabets, e.g., A, G, J, L, P, Q, and T, Greek alphabets, e.g., Γ (gamma), Δ (delta), A (lambda), Π (pi), Ψ (psi), and Ω (omega), and the like to facilitate identification of the orientation.

Alternatively, the datum points DP may include a display means representing a sequence number, such as 1D barcode or 2D barcode, instead of symbols.

The controller 119 may be configured to generate a datum point formation signal DFS including information about an operation of the marker 117. The controller 119 may be configured to transmit the datum point formation signal DFS to the controller 143. The datum point formation signal DFS may include the sequence numbers of the datum points DP, information about lanes of the datum points DP (i.e., values indicating coated lanes matching the datum points DP), and a result of judgement of the datum points DP (i.e., a value indicating the quality (good or bad quality) of the formation of the datum points DP). Coordinates of the datum points DP may indicate positions of the datum points DP in the machine direction, and the lanes of the datum points DP may indicate positions in the transverse direction.

The controller 143 may be configured to collect the datum point formation data DFD, based on the coordinate data CD1 and the datum point formation signal DFS. The datum point formation data DFD may include the sequence numbers of the datum points DP, the result of judgement of the datum points DP, and the coordinates matching the datum points DP.

For the collection of the datum point formation data DFD, the controller 143 may be configured to match coordinates to the sequence numbers of the datum points DP and the result of judgement of the datum points DP. The controller 143 may be configured to calibrate the coordinates of the coordinate data CD1 based on an offset length of the marker 117 and match the calibrated coordinates to the sequence numbers of the datum points DP and the result of judgement of the datum points DP.

The offset length of the marker 117 may be defined as a length of the first electrode sheet ES1 between the rewinder 113 and a part of the electrode sheet ES processed by the marker 117. A plurality of guide rolls may be interposed between a sensing part 131S and the rewinder 113 to define a moving path of the first electrode sheet ES1. Thus, the offset length may be equal to or greater than a linear distance between the sensing part 131S and the rewinder 113.

The controller 143 may be configured to transmit data of an operation of the marker 117 to the server 1020 via the server 1010. Accordingly, the server 1020 may be configured to count a marking success signal of the datum points DP. The server 1020 may be configured to store the number of datum points DP on the completed second electrode roll ER2. The server 1020 may be configured to produce a first roll map of the second electrode roll ER2 processed by the coating device 100, based on the data of the operations of the marker 117 and data of additional process events.

Here, the data of the additional process events may include inspection data and measurement data of the first electrode sheet ES1. The measurement data may include a plurality of measured values expressed numerically. For example, the measurement data may include thickness data of the first electrode sheet ES1 and data of a loading amount of a coating material on the first electrode sheet ES1. Here, the loading amount is the amount of the coating material loaded per unit area of the first electrode sheet ES1 and may be an area density of the coating material.

Whether a measured part of the first electrode sheet ES1 is defective or not may be determined by processing the measurement data by a set method. When a measured amount of the coating material on the first electrode sheet ES1 (e.g., the loading amount of the coating material on the first electrode sheet ES1 or a thickness of the first electrode sheet ES1) is in a set range including upper and lower limits, a corresponding part of the first electrode sheet ES1 may be determined as a non-defective. The corresponding part of the first electrode sheet ES1 may be determined as defective, when the measured amount of the coating material on the first electrode sheet ES1 (e.g., the loading amount of the coating material on the first electrode sheet ES1 or the thickness of the first electrode sheet ES1) is less than the lower limit or greater than the upper limit.

The measurement data may be collected by a measuring device. Examples of the measuring device may include a time delay and integration (TDI) camera, a complementary metal oxide semiconductor (CMOS) image sensor, and a time-of-flight (TOF) sensor. The measuring device may include an emitter and a receiver that are configured to perform measurement using non-destructive signals such as ultrasound waves, microwaves, terahertz waves, or infrared rays. The measuring device may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a visible light and infrared sensor, a camera, etc.

The measuring device may include a processor configured to generate evaluation data based on the measurement data. The evaluation data may be collected based on a comparison between measured values of a plurality of sections of the first electrode sheet ES1 and the set range.

For example, a measured value (or an average of measured values) that is in a first range may be determined as normal, a measured value (or an average of measured values) that is in a second range greater than the first range may be determined as excessive, a measured value (or an average of measured values) that is in a third range greater than the second range may be determined as very excessive, a measured value (or an average of measured values) that is in a fourth range less than the first range may be determined as insufficient, and a measured value (or an average of measured values) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

Evaluation values of the evaluation data may be related to coordinates. For example, each of the evaluation values may match a start coordinate and an end coordinate of a part of the first electrode sheet ES1 for which the evaluation value is calculated.

The inspection data may be collected by an inspector. The inspector may be configured to inspect the first electrode sheet ES1 to collect inspection data of the first electrode sheet ES1. The inspector may be configured to detect defects, such as a surface defect, of the first electrode sheet ES1, based on a change in a color and reflectivity or etc. of a surface of the first electrode sheet ES1. The inspector may be configured to collect inspection data of a part of the electrode sheet ES corresponding to (e.g., overlapping) a sensing part.

The inspection data collected by the inspector may include a result of judging the quality of the part of the first electrode sheet ES1 and data about a process event. For example, the inspection data may include data about the appearance of the first electrode sheet ES1 collected by an image-based inspection device such as a vision machine, size data such as a width of an insulating material on the coating material and an overlapping width between the coating material and the insulating material, mismatching data between coated lanes on an upper surface of the first electrode sheet ES1 and coated lanes on a lower surface of the first electrode sheet ES1, data about disconnections and joints of the first electrode sheet ES1, data about a part of the first electrode sheet ES1 on which a sampling inspection is performed, data about a part of the first electrode sheet ES1 to be scrapped, data about a scrapped part of the first electrode sheet ES1, data about whether the coating material and the insulating material on the first electrode sheet ES1 are defective or not, data about datum points for marking a position on the first electrode sheet ES1, and data about defects such as a pinhole defect, a crater defect, a line defect, a crack defect, a side ring defect, an island defect, a fold defect, a wrinkle defect, a pit defect, and a scratch defect. The inspector may be a color sensor, a joint sensor, a datum point sensor, or a vision machine.

The measurement data and the inspection data described above may be time series data. The measurement data and the inspection data may be temporally ordered. Temporal ordering is a main feature of time series data and should be understood as organizing events in an order in which they occur and arrive to be processed. That is, the measurement data and the inspection data may be stored based on points in time when measurement and inspection are performed and may be related to time. Accordingly, each of measured values of the measurement data may be matched to time, and each of inspection values of the inspection data may be matched to time.

For example, data of an measured amount (e.g., an amount of loading on the first electrode sheet ES1 or a thickness of the first electrode sheet ES1) may include a series of measured amounts (e.g., the amounts of loading on the first electrode sheet ES1 or thicknesses of the first electrode sheet ES1) and time values related to the series of measured amounts. The measured values and the time values may be matched in a one-to-one manner but are not limited thereto. As another example, the defect data may include a value indicating a defect and a time value related to the value indicating the defect. Here, the value indicating the defect should be understood to mean that the value includes information regarding at least one of the presences of defects or the types of the defects.

A roll map may include coordinate-related measurement data and coordinate-related inspection data that are generated by relating measurement data and inspection data, which are time-series data, with coordinate data. Accordingly, the roll map may provide traceability for an electrode process during performing of a subsequent process or after the shipment of a product.

FIG. 3 illustrates a roll pressing device 200 according to example embodiments.

Referring to FIG. 3, the roll pressing device 200 may include an unwinder 211, a rewinder 213, a splicing table 215, a scrap winder 217, pressing rolls 219, a first rotary encoder 221, a second rotary encoder 223, a datum point sensor 231, an alarm device 233, a controller 241, and a controller 243.

The second electrode roll ER2 may be loaded on the unwinder 211. The second electrode roll ER2 may be completed by the coating device 100 and transferred to the roll pressing device 200 by a transfer device. The unwinder 211 may be configured to unwind the second electrode sheet ES2 from the second electrode roll ER2. The rewinder 213 may be configured to wind the second electrode sheet ES2 into the third electrode roll ER3. The second electrode sheet ES2 may be wound into the third electrode roll ER3, and the third electrode roll ER3 may be cut and separated in the transverse direction after a certain winding length is reached. Accordingly, the second electrode sheet ES2 may be moved between the unwinder 211 and the rewinder 213.

The first rotary encoder 221 may be configured to sense an amount of the second electrode sheet ES2 unwound from the second electrode roll ER2 by the unwinder 211. Accordingly, the first rotary encoder 221 may be configured to generate an input amount signal UWAS2 indicating a length of the second electrode sheet ES2 unwound by the unwinder 211. The first rotary encoder 221 may be configured to transmit the input amount signal UWAS2 to the controller 241.

The second rotary encoder 223 may be configured to sense an amount of the second electrode sheet ES2 wound into the third electrode roll ER3 by the rewinder 213. Accordingly, the second rotary encoder 223 may be configured to generate an exhaustion amount signal WAS2 indicating a length of the second electrode sheet ES2 wound by the rewinder 213. The second rotary encoder 223 may be configured to transmit the exhaustion amount signal WAS2 to the controller 241.

The controller 241 may be configured to collect coordinate data CD2 of the second electrode sheet ES2, based on the exhaustion amount signal WAS2 and/or the input amount signal UWAS2 of the second electrode sheet ES2. For example, the controller 241 may determine a moving distance of the second electrode sheet ES2, based on the exhaustion amount signal WAS2 of the second electrode sheet ES2. Accordingly, the controller 241 may be configured to determine a position of a part of the second electrode sheet ES2, which is to be wound by the rewinder 213, on the second electrode sheet ES2 at each point in time when a process event occurs on the second electrode sheet ES2. Here, the process event may include all matters occurring in the roll pressing device 200, such as sensing of the datum points DP by the datum point sensor 231 and processing of the second electrode sheet ES2 by the pressing rolls 219.

As another example, the controller 241 may determine a moving distance of the second electrode sheet ES2 based on the input amount signal UWAS2 of the second electrode sheet ES2 or based on each of the exhaust amount signal WAS2 and the input amount signal UWAS2. Hereinafter, as a non-limiting example, the technical idea of the present invention will be described with respect to an embodiment in which the controller 241 collects the coordinate data CD2 based on the exhaustion amount signal WAS2 of the second electrode sheet ES2.

The coordinate data CD2 may include coordinates matching parts of the second electrode sheet ES2. That is, arbitrary points on the second electrode sheet ES2 may match coordinates. The coordinates may be 1D quantity in a machine direction of the second electrode sheet ES2 but is not limited thereto. The coordinates may be 2D quantities in the machine direction of the second electrode sheet ES2 and a Y-axis direction, which is a transverse direction of the second electrode sheet ES2.

The datum point sensor 231 may be configured to sense datum points DP on the second electrode sheet ES2. The datum point sensor 231 may include a sensing part 231S and a processor 231P. The sensing part 231S and the processor 231P may be connected by wire or wirelessly.

As a non-limiting example, the sensing part 231S may include an optical character reader (OCR). As a non-limiting example, the sensing part 231S may include a bar code reader (BCR). The sensing part 231S may be configured to sense the datum points DP to generate a datum point sensing signal DSS. The sensing part 231S may be configured to transmit the datum point sensing signal DSS to the processor 231P.

The datum points DP may be formed at the same positions on an upper surface and lower surface of the second electrode sheet ES2 in the machine direction MD. Accordingly, the positions of the datum points DP on each of the upper and lower surfaces of the second electrode sheet ES2 may be determined by sensing the datum points DP on the upper or lower surface of the second electrode sheet ES2.

The datum point sensing signal DSS may include read values of the datum points DP. As described above, the datum points DP may include symbols indicating the orientation of the datum points DP, sequence numbers of the datum points DP, and lanes of the datum points DP. The processor 231P may process the datum point sensing signal DSS to identify symbols included in the datum points DP and obtain information represented by the datum points DP from the symbols.

The processor 231P may be configured to collect datum point data DSD, based on the datum point sensing signal DSS and the coordinate data CD2. The processor 231P may be configured to collect the datum point data DSD by matching coordinates of the coordinate data CD2 to the datum point sensing signal DSS generated by reading one of the datum points DP. Accordingly, the datum point sensing data DSD may include a recognized sequence number of a sensed datum point DP among the datum points DP, a recognized lane, and a recognized coordinate of a sensed datum point DP among datum points DP matching the sequence number and the lane.

Here, the recognized sequence number, the recognized lane, and the recognized coordinate of the datum point sensing data DSD are languages for distinguishing them from the sequence number, lane and coordinate of the datum point formation data DFD. The recognized sequence number and lane of the datum point sensing data DSD may be determined based on recognition of the datum points DP (i.e., OCR recognition or BCR recognition) by the processor 231P. The recognized coordinate of the datum point sensing data DSD may be determined based on an exhaustion amount and an offset length sensed by the second rotary encoder 223.

A sequence number, a lane, and a coordinate of the datum point formation data DFD collected by the controller 143 may be different from the recognized sequence number, lane, and coordinate of the datum point sensing data DSD due to factors such as the scrapping of a part of the electrode sheet ES and mis-recognition of the datum points DP.

For matching between the datum point sensing signal DSS and the coordinates of the coordinate data CD2, the processor 231P may be configured to calibrate the coordinates of the coordinate data CD2. The processor 231P may be configured to calibrate the coordinates of the coordinate data CD2 based on a length of the second electrode sheet ES2 between a part of the second electrode sheet ES2 wound by the rewinder 213 and a part of the second electrode sheet ES2 sensed by the sensing part 231S, and match the calibrated coordinates to the datum point sensing signal DSS.

The processor 231P may be configured to transmit the datum point sensing data DSD to the controller 241. The controller 241 may be configured to transmit the datum point sensing data DSD to the controller 243. The controller 243 may be configured to transmit the datum point sensing data DSD and additional process event data to the server 1020 (see FIG. 1) via the server 1010 (see FIG. 1). The server 1020 (see FIG. 1) may be configured to generate a second roll map of the third electrode roll ER3 processed by the roll pressing device 200, based on the datum point data DSD1 and additional process event data.

The controller 243 may be configured to load the datum point formation data DFD from the server 1020. The controller 243 may be configured to receive the datum point formation data DFD transmitted from the server 1020 via the server 1010. As described above, the datum point formation data DFD may be collected by the controller 143 of the coating device 100 (see FIG. 2) and stored in the server 1020. The controller 243 may be configured to compare the datum point formation data DFD with the datum point sensing data DSD.

The controller 243 may be configured to set recognition sections of the datum points DP, based on the datum point formation data DFD. The controller 243 may be configured to correct the recognition sections, based on the datum point sensing data DSD. Here, the recognition sections of the datum points DP are a range of coordinates of the electrode sheet ES in which the datum points DP are to be sensed.

The controller 243 may be configured to generate an alarm signal AS when datum points DP shown to be formed normally in the datum point formation data DFD are not sensed in a corresponding recognition section. The controller 243 may be configured to generate the alarm signal AS, based on the datum point formation data DFD and the datum point sensing data DSD. The controller 243 may be configured to transmit the alarm signal AS to the alarm device 233. The alarm device 233 may be configured to generate an alarm to inform an operator that the datum points DP are not recognized, based on the alarm signal AS. The controller 243 may be configured to collect the datum point nonrecognition data DUD indicating that the datum points DP are not recognized, based on the datum point formation data DFD and the datum point sensing data DSD.

Recognition of successfully formed datum points DP may fail due to a cause such as an error of an alignment of a field of view (FOV) of a camera of the sensing part 231S for sensing the datum points DP or a lighting setting error. The datum points DP may serve as a criterion for calibrating coordinates of process event data and thus accurate formation and recognition of the datum points DP is a key factor in the reliability of a roll map. According to example embodiments, when a factor impeding the recognition of the datum points DP occurs, an alarm may be generated and an immediate action may be taken to mitigate or minimize the omission of recognition of the datum points DP. Accordingly, it is possible to increase a recognition rate of the datum points DP and the reliability of the roll map.

The controller 243 may be configured to control operations of the unwinder 211, the rewinder 213, the scrap winder 217, and the pressing rolls 219, based on the datum point sensing data DSD. The controller 243 may be configured to generate a signal for operating or stopping the unwinder 211, the rewinder 213, the scrap winder 217 and the pressing rolls 219. The signal for operating or stopping the unwinder 211, the rewinder 213, the scrap winder 217, and the pressing rolls 219 may be generated based on body including a product ID and specifications of a manufacturing recipe and the datum point data DSD.

The roll pressing device 200 may additionally include an inspector and a measuring device, similar to the coating device 100 of FIG. 2. The controller 243 may be configured to reduce a movement speed of the second electrode sheet ES2 or generate a signal for stopping winding and unwinding of the unwinder 211 and the rewinder 213, when defect data of a first roll map formed by setting, as a trigger, the completion of the second electrode roll ER2 by the coating device 100 or a defect on the second electrode sheet ES2 identified by the inspector and the measuring device in the roll pressing device 200 approaches the splicing table 215.

The scrap winder 217 may be configured to wind a defective part DES of the second electrode sheet ES2 as indicated by a dashed line after a start point of the defect (or a point on the defect adjacent to the start point when a process margin is taken into account) is cut on the splicing table 215. After the defective part DES of the second electrode sheet ES2 is sufficiently wound by the scrap winder 217, a part of the second electrode sheet ES2 connected to the scrap wider 217 and a part of the second electrode sheet ES2 connected to the unwinder 211 may be separated from each other. Next, a current process may be continued by connecting the part of the second electrode sheet ES2 connected to the unwinder 211 and a part of the second electrode sheet ES2 connected to the rewinder 213. The part of the second electrode sheet ES2 connected to the unwinder 211 and the part of the second electrode sheet ES2 connected to the rewinder 213 may be connected on the splicing table 215.

A part of the second electrode sheet ES2 passing the splicing table 215 may be pressed by the pressing rolls 219 and wound into the third electrode roll ER3 by the rewinder 213.

Referring to FIGS. 2 and 3, the controllers 141 and 241 and the controllers 143 and 243 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The controllers 141 and 241 and the controllers 143 and 243 may include a power supply, a CPU, an input interface, an output interface, a communication interface, and memory devices. The power supply may be configured to supply power to the other components of the controllers 141 and 241 and the controllers 143 and 243, such as the CPU, the input interface, the output interface, the communication interface and the memory devices, to operate the controllers 141 and 241 and the controllers 143 and 243. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the controllers 141 and 241 and the controllers 143 and 243 or between the second controller 143 and the server 150.

However, embodiments are not limited thereto, and the controllers 141 and 241 and the controllers 143 and 243 may each include one of a simple controller, a complex processor such as a microprocessor, a CPU or a GPU, a processor configured by software, dedicated hardware, and firmware. The controllers 141 and 241 and the controllers 143 and 243 may be implemented, for example, by a general-purpose computer or application-specific hardware such as a digital signal processor (DSP), a field-programmable gate array (FPGA) or an application specific integrated circuit (ASIC).

The controller 119, the processors 231P and 331P, the server 1010, and the server 1020 may be implemented by hardware, firmware, software, or a combination thereof. For example, the controller 119, the processors 231P and 331P, the server 1010, and the server 1020 may include computing devices such as workstation computers, desktop computers, laptop computers, and tablet computers. The controller 119, the processors 231P and 331P, the server 1010, and the server 1020 may include a simple controller, a complex processor such as a microprocessor, a CPU, or a GPU, a processor configured by software, dedicated hardware, or firmware. The controller 119, the processors 231P and 331P, the server 1010, and the server 1020 may be implemented, for example, by a general-purpose computer or application-specific hardware such as a digital signal processor (DSP), a field programmable gate array (FPGA), or an application specific integrated circuit (ASIC).

The server 1020 may include a physical server or a cloud server. The server 1020 may provide data and an analysis result to an operator through various frameworks. A framework may include a protocol supporting data transmission so that the client device 1030 may visualize data through a user interface and provide updated visualization when new data is calculated by the server 1020. The protocol supporting data transmission may include HTML, JavaScript, and/or JSON.

The server 1020 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The server 1020 may be configured to generate a first roll map of the second electrode roll ER2 completed by the coating device 100 and a second roll map of the third electrode roll ER3 completed by the roll pressing device 200.

The client device 1030 may be configured to transmit an API request to the server 1020 to inquire information about a roll map. The server 1020 may be configured to transmit a uniform resource locator (URL) (or a schema) including source code for displaying the roll map on the client device 1030 to the client device 1030, in response to the API request from the client device 170. The client device 1030 may access source code for visualizing and displaying the roll map through the URL (or schema).

The client device 1030 may be a device, e.g., a mobile device, such as a workstation computer, a laptop computer, a desktop computer, a tablet PC or a smart phone, or a wearable device, for communication with the server 1020. The client device 1030 may include input tools for inputting the API request and a display device displaying the roll map.

Referring back to FIGS. 1 to 3, a plug-in architecture may be implemented by the secondary battery manufacturing system 10 together with an API for obtaining data to provide plug-and-play connectivity of a sensor, a measuring device, and an inspector. Accordingly, resources in a certain process step and a specific site can be easily transferred to a different process and a different site or new resources can be easily introduced into each process step and each site.

In some embodiments, the secondary battery manufacturing system 10 may further include a manual input system that allows an operator to input manufacturing data. The secondary battery manufacturing system 10 may allow data to be input by an operator with an input tool, and a computer-based input of manufacturing data such as Excel file scraping. The manual input system may be, for example, human-machine interfaces (HMI) of supervisory control and data acquisition (SCADA). Generally, SCADA may include a combination of software and hardware, such as a PLC and remote terminal units (RTUs). HMI is a screen that supports communication between an operator and an SCADA system, and is a key element of the SCADA system. For example, manual input by HMI may include selecting a defective type and reflecting performance at the time of completion.

According to some embodiments, the operations of the controller 119, the processors 231P and 331P, the server 1010, and the server 1020 may be implemented by instructions stored on a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The controller 119, the processors 231P and 331P, the server 1010, and the server 1020 may include firmware, software, routines, and instructions for performing the above-described operations or processes to be described below. For example, the controller 119, the processors 231P and 331P, the server 1010, and the server 1020 may be instantiated in a memory.

### (Second Embodiment)

FIG. 4 is a flowchart of a method of manufacturing a secondary battery according to embodiments.

Referring to FIGS. 1 to 4, in P110, the datum point formation data DFD may be loaded. The datum point formation data DFD may be loaded from the server 1020 to the controller 243 of the roll pressing device 200.

Next, in P120, recognition sections may be set. The controller 243 may be configured to set recognition sections, based on the datum point formation data DFD. Table 1 below shows examples of a recognition section. In Table 1, coordinates and recognition sections are expressed in arbitrary units.

**[Table 1]**

| Order of datum point | Coordinate | Marked state | Recognition section |
|---|---|---|---|
| 1 | 200 | G | 150 to 250 |
| 2 | 300 | NG | 250 to 350 |
| 3 | 400 | G | 350 to 450 |
| 4 | 500 | NG | 450 to 550 |

In Table 1, the recognition sections of the datum points DP may be set based on coordinates of the datum points DP and an interval between the datum points DP. Lengths of the recognition sections of the datum points DP may be substantially the same as the interval between the datum points DP but are not limited thereto. As another example, the lengths of the recognition sections of the datum points DP may be less than the interval between the datum points DP. As another example, the lengths of the recognition sections of the datum points DP may be greater than the interval between the datum points DP. The coordinate of each of the datum points DP may be included in the recognition section of each of the datum points DP. As a non-limiting example, the coordinate of each of the datum points DP may be set as a center of the recognition section of each of the datum points DP. As another example, the recognition section of each of the datum points DP may be set such that the recognition section of each of the datum points DP is divided at a ratio of 6:4 by the coordinate of each of the datum points DP. As another example, the recognition section of each of the datum points DP may be set such that the recognition section of each of the datum points DP is divided at a ratio of 7:3 by the coordinate of each of the datum points DP. As another example, the recognition section of each of the datum points DP may be set such that the recognition section of each of the datum points DP is divided at a ratio of 8:2 by the coordinate of each of the datum points DP. As another example, the recognition section of each of the datum points DP may be set such that the recognition section of each of the datum points DP is divided at a ratio of 9:1 by the coordinate of each of the datum points DP. As another example, the recognition section of each of the datum points DP may be set such that the recognition section of each of the datum points DP is divided at a ratio of 4:6 by the coordinate of each of the datum points DP. As another example, the recognition section of each of the datum points DP may be set such that the recognition section of each of the datum points DP is divided at a ratio of 3:7 by the coordinate of each of the datum points DP. As another example, the recognition section of each of the datum points DP may be set such that the recognition section of each of the datum points DP is divided at a ratio of 2:8 by the coordinate of each of the datum points DP. As another example, the recognition section of each of the datum points DP may be set such that the recognition section of each of the datum points DP is divided at a ratio of 1:9 by the coordinate of each of the datum points DP. In the example of Table 1, because an interval between datum points is about 100 (a.u.), and for example, a coordinate of a first datum point DP is 200 (a.u.), a recognition section of the first datum point DP may be set such that a length of the recognition section is 100 (a.u.) and a coordinate of a center thereof is 200 (a.u.). Accordingly, the recognition section of the first datum point DP may be in a range of 150 (a.u.) to 250 (a.u.). Similarly, the recognition section of a second datum point DP may be in a range of 250 (a.u.) to 350 (a.u.), the recognition section of a third datum point DP may be in a range of 350 (a.u.) to 450 (a.u.), and the recognition section of the fourth datum point DP may be in a range of 450 (a.u.) to 550 (a.u.).

Next, in P130, the datum points DP may be sensed. The datum points DP may be sensed by the datum point sensor 231 of the roll pressing device 200. The datum point sensor 231 may be configured to collect the datum point sensing data DSD.

Next, in P150, when in P140, the datum points DP are recognized, the recognition sections of the datum points DP may be corrected. The recognition sections of the datum points DP may be corrected by the controller 243. Table 2 below shows correction of the recognition sections of datum points DP. In Table 2, coordinates and the recognition sections are expressed in arbitrary units.

**[Table 2]**

| Order of datum point | Coordinate | Marked state | Recognition section | Recognized coordinate | Corrected recognition section |
|---|---|---|---|---|---|
| 1 | 200 | G | 150 to 250 | 195 | |
| 2 | 300 | NG | 250 to 350 | | 245 to 345 |
| 3 | 400 | G | 350 to 450 | | 345 to 445 |
| 4 | 500 | NG | 450 to 550 | | 445 to 545 |

In the example of Table 2, when a coordinate of a first datum point DP sensed by the datum point sensor 231 is 195 (a.u.), the difference between the coordinate of the first datum point DP of the datum point formation data DFD and the sensed coordinates is 5 (a.u.). Accordingly, upper and lower limits of recognized coordinates of subsequent second to fourth datum points DP may be corrected by the difference of 5 (a.u.). Unlike in Table 2, when the coordinates of the datum point forming data DFD are the same as the coordinates of the datum point sensing data DSD, the recognition sections of the datum points DP may not be corrected. Thereafter, in P160, when the datum points DP are not recognized in P160, an alarm may be generated. The controller 243 may be configured to generate an alarm signal AS, and the alarm device 233 may be configured to generate an alarm based on the alarm signal AS. Table 3 below shows the generation of alarms. In Table 2, coordinates and recognition sections are expressed in arbitrary units.

**[Table 3]**

| Order of datum point | Coordinate | Marked state | Recognized coordinate | Corrected recognition section | Generation of alarm |
|---|---|---|---|---|---|
| 1 | 200 | G | 195 | 150 to 250 | X |
| 2 | 300 | NG | 300 | 245 to 345 | X |
| 3 | 400 | G | not recognized | 350 to 450 | O |
| 4 | 500 | NG | not recognized | 450 to 550 | X |

In Table 3, first and second datum points DP are recognized by the datum point sensor 231 and thus an alarm is not generated. A third datum point DP has a good marked state G, but is not sensed by the datum point sensor 231 and thus an alarm may be generated. A fourth datum point DP is not sensed by the datum point sensor 231 but has a no good marked state and thus an alarm may not be generated.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing method comprising:
loading datum point formation data indicating formation of datum points on an electrode sheet, the datum point formation data including a sequence number, a coordinate, and an evaluation of each of the datum points;
setting recognition sections of the datum points based on the datum point formation data, the recognition sections being ranges of the coordinates on the electrode sheet in which the datum points are to be sensed; and
sensing the datum points on the electrode sheet to collect datum point sensing data.

2. The secondary battery manufacturing method of claim 1, wherein
a length of each of the recognition sections is equal to an interval between the datum points.

3. The secondary battery manufacturing method of claim 1, wherein
a center of each of the recognition sections is the same as a coordinate of a corresponding datum point among the datum points.

4. The secondary battery manufacturing method of claim 1, wherein
the datum point sensing data comprises a recognized sequence number and a recognized coordinate of each of the datum points.

5. The secondary battery manufacturing method of claim 4, further comprising
correcting the recognition sections, based on the datum point formation data and the datum point sensing data.

6. The secondary battery manufacturing method of claim 5, wherein
the recognition sections are corrected based on a difference between the coordinate and the recognized coordinate of each of the datum points.

7. The secondary battery manufacturing method of claim 1, further comprising
generating an alarm when the datum points are not recognized in the recognition sections of the datum points.

8. The secondary battery manufacturing method of claim 7, wherein
the alarm is generated when the evaluation of the datum points of the datum point formation data reveals good.

9. The secondary battery manufacturing method of claim 1, wherein
the datum point formation data is collected by a coating process in which one or more coated lanes are formed on the electrode sheet, and
the datum point sensing data is collected by a roll pressing process in which the electrode sheet is pressed.

10. A secondary battery manufacturing system comprising:
a datum point sensor configured to sense datum points on an electrode sheet to collect datum point sensing data, the datum point sensing data including a recognized sequence number and a recognized coordinate of each of the datum points; and
a controller configured to load datum point formation data indicating formation of the datum points on the electrode sheet, the datum point formation data including a sequence number, a coordinate, and an evaluation of each of the datum points,
wherein the controller is further configured to set recognition sections of the datum points, based on the datum point formation data.

11. The battery manufacturing system of claim 10, wherein
the controller is further configured to correct the recognition sections, based on the datum point formation data and the datum point sensing data.

12. The battery manufacturing system of claim 11, wherein
the recognition sections are corrected based on a difference between the coordinate and the recognized coordinate of each of the datum points.

13. The battery manufacturing system of claim 10, wherein
the controller is further configured to generate an alarm signal for generating an alarm when the datum points are not recognized in the recognition sections of the datum points.

14. The secondary battery manufacturing system of claim 13, wherein
the alarm signal is generated when the evaluation of the datum points of the datum point formation data reveals good.
